Europäisches Patentamt

European Patent Office

Office européen des brevets

(19)

(11) Publication number: **0 241 558**
**A1**

# EUROPEAN PATENT APPLICATION

published in accordance with Art. 158(3) EPC

(12)

(21) Application number: **86905430.4**

(22) Date of filing: **18.09.86**

Data of the international appli-
cation taken as a basis:

(86) International application number:
**PCT/JP 86/00484**

(87) International publication number:
**WO 87/02146 (09.04.87 87/8)**

(51) Int. Cl.⁴: **G 02 B 3/00,** C 23 C 14/00,
C 23 C 16/30

(30) Priority: **27.09.85 JP 214209/85**

(43) Date of publication of application: **21.10.87**
**Bulletin 87/43**

(84) Designated Contracting States: **DE FR GB**

(71) Applicant: **SONY CORPORATION,**
**7-35 Kitashinagawa 6-Chome Shinagawa-ku,**
**Tokyo 141 (JP)**

(72) Inventor: **KUBOTA, Shigeo, Sony Corporation 7-35,**
**Kitashinagawa 6-chome, Shinagawa-ku Tokyo 141 (JP)**
Inventor: **OGAWA, Masataka Sony Corporation, 7-35,**
**Kitashinagawa 6-chome, Shinagawa-ku Tokyo 141 (JP)**

(74) Representative: **Cotter, Ivan John et al, D. YOUNG &**
**CO. 10 Staple Inn, London WC1V 7RD (GB)**

(54) **METHOD OF MANUFACTURING GRADIENT INDEX LENS.**

(57) Method of manufacturing a gradient index lens (16) or
(36) having a refractive index which can be expressed as a
function of position. In order that a gradient index lens (16)
or (36) having extremely low aberrations can be manufac-
ture easily, a spherical portion (13) or (33) is formed in
advance on the surface (12) or (32) of a base (11) or (31), and
a layer (14) or (34) which gives rise to refractive index
distribution is laid on the surface (12) or (32) of the base (11)
or (31). The resulting surface layer is processed to have a
flat surface. This method can be applied in the production of
a lens which is required to have a high performance, such
as an objective lens of an optical head for an optical disc
player.

EP 0 241 558 A1

S P E C I F I C A T I O N

METHOD OF MANUFACTURING GRADIENT INDEX LENS

Technical Field

The present invention relates to a method of manufacturing a gradient index lens whose refractive index is represented as a function of position.

Background Art

As conventional gradient index lenses, an axial gradient lens whose refractive index $n(z)$ at a position $z$ in a direction of an optical axis is represented by:

$$n(z) = n_0 + az$$

and, a radial gradient index lens whose refractive index $n(r)$ at a position $r$ $(^2 = x^2 + y^2)$ in the radial direction perpendicular to the optical axis is represented by:

$$n^2(r) = n_0^2 \{1 - (gr)^2 + h_4(gr)^4 + h_6(gr)^6 + h_8(gr)^8 + \ldots\}$$

are known.

However, in the axial gradient index lens, one refraction surface must be machined to be a spherical surface, and the other refraction surface must be machined to be a flat surface parallel to an equi-refractive index plane or a spherical surface.

In the radial gradient index lens, in order to reduce aberration, at least one refraction surface must be machined to be a spherical surface. In this case, however, the refraction surface must be machined to be a spherical surface so that the center of a curvature is located along a symmetrical axis of a gradient index.

Disclosure of Invention

However, if an error occurs in the above machining, a coma is produced. For this reason, if the above gradient index lens is applied to a lens such as an objective lens of an optical head of an optical disk player, which requires high performance, high-precision machining must be performed.

However, such high-precision machining cannot be easily performed, and increases manufacturing cost of the lens.

In order to solve the above problems, a method of manufacturing a gradient index lens according to the present invention comprises the step of forming a spherical surface on a surface of a substrate, the step of depositing a plurality of materials having different refractive indexes on the spherical surface while sequentially changing a mixing ratio thereof, and the step of machining the spherical surface subjected to deposition to be a flat surface.

According to the method of manufacturing the gradient index lens of the present invention, materials stacked on the spherical surface on the surface of the substrate exhibit a spherically symmetrical gradient index, and the gradient center of the spherically symmetrical gradient index can automatically coincide with the center of curvature of the spherical surface.

Therefore, in a gradient index lens manufactured by the method of the present invention, since the center of curvature of the spherical surface can automatically coincide with the gradient center of the spherically symmetrical gradient index, even if the spherical surface is used as one refraction surface, aberration is very small.

In addition, since the center of curvature of the spherical surface can automatically coincide with the gradient center of the spherically symmetrical gradient index and the other refraction surface can be obtained by flat-surface machining, the manufacturing process can be facilitated.

Brief Description of Drawings

Fig. 1 is an enlarged sectional view showing part of a first embodiment of the present invention;

- 3 -

0241558

Fig. 2 is a plan view showing the first embodiment;

Fig. 3 is a graph showing a gradient index along the axis of a gradient index lens manufactured in accordance with the first embodiment;

Fig. 4 is a side view showing an application of a gradient index lens manufactured in accordance with the first embodiment; and

Fig. 5 is an enlarged view showing part of a second embodiment of the present invention.

Best Mode of Carrying Out the Invention

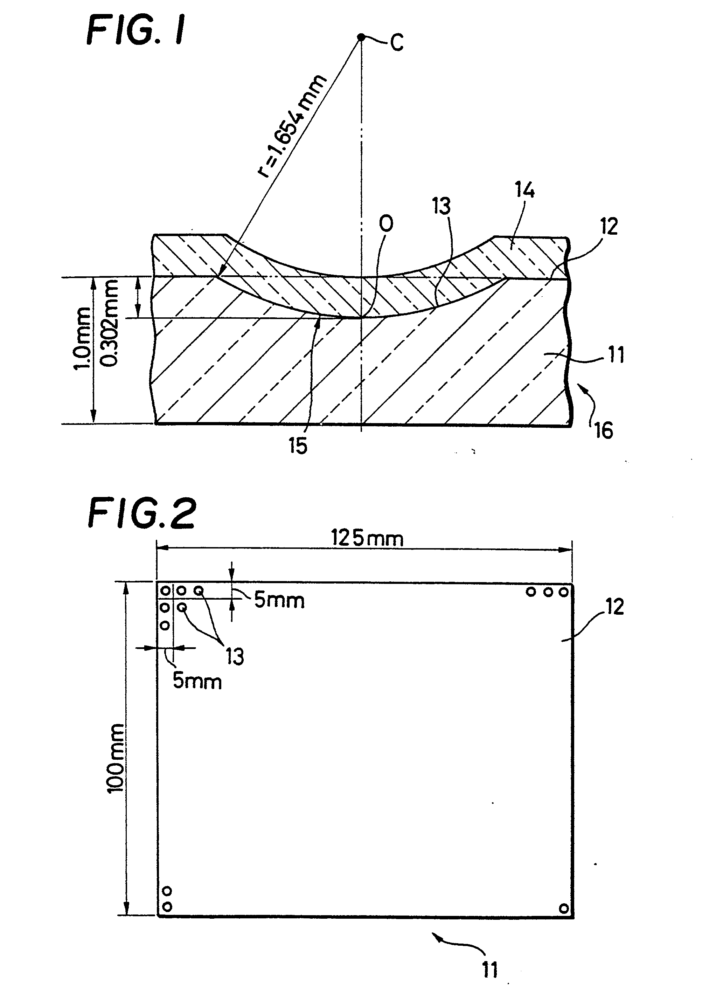

First and second embodiments of the present invention and an application of a lens manufactured in accordance with the first embodiment will now be described with reference to Figs. 1 to 5.

Figs. 1 to 3 show the first embodiment. In the first embodiment, as shown in Figs. 1 and 2, a concave spherical surface 13 having a radius r of curvature of 1.654 mm and a depth of 0.302 mm is formed in one surface 12 of a parallel-plate substrate 11 which consists of optical glass having a refractive index of 1.506 and dimensions of 100 x 125 x 1 mm by hot-roll press at a 5-mm pitch.

ZnS and ZnSe are deposited on the surface 12 to have the same thickness as the depth of the concave spherical surface 13 by the CVD method. In this case, at the beginning of deposition, the content of ZnS is set to be 100% and that of ZnSe is set to be 0%, and thereafter, the content of ZnS is decreased while that of ZnSe is increased.

The refractive index of ZnS is 2.364, and that of ZnSe is 2.654. It is known that when mixing ratio of the materials having different refractive indexes as above is changed, an intermediate refractive index between their refractive indexes can be realized.

Therefore, a thin film 14 having a gradient index is formed on the surface 12. The thin film 14 can be formed by vacuum deposition or sputtering in place of the CVD method, and $SiO_2$, $Si_3N_4$ or the like can be used as its materials.

The surface 12 side of the substrate 11 is polished to be a flat surface until the surface 12 is exposed. Thus, a plano-convex lens portion 15 can be obtained in the parallel-plate substrate 11, as indicated by an alternate long and short dashed line in Fig. 1.

Assuming that the lowermost base point of the concave spherical surface 13 is given as origin O, and assuming an orthogonal coordinate system having a direction from the origin O to the center C of curvature of the concave spherical surface 13 as a z direction, if a distance from the center C of curvature is given as p,

$$p^2 = x^2 + y^2 + (z - r)^2$$

A refractive index n(p) of the thin film 14 is represented as follows, using $n_0$ to $n_4$ as constants:

$$n(p) = n_0 + n_1(r - p) + n_2(r - p)^2 + n_3(r - p)^3 + n_4(r - p)^4$$

More specifically, the refractive index of the lens portion 15 exhibits the spherically symmetrical gradient index, and the gradient center of the spherically symmetrical gradient index coincides with the center C of curvature of the concave spherical surface 13.

At the origin O, since

$$x = y = z = 0$$

then,

$$p = r$$

The refractive index n(p) is represented by:

$$n(p) = n_0$$

Along the optical axis, i.e., the z axis, since

$$x = y = 0, z = t$$

then,

$$p = |t - r| = r - t \quad (r \geq t)$$
$$r - p = t$$

The refractive index n(p) is represented by:

$$n(p) = n_0 + n_1 t + n_2 t^2 + n_3 t^3 + n_4 t^4$$

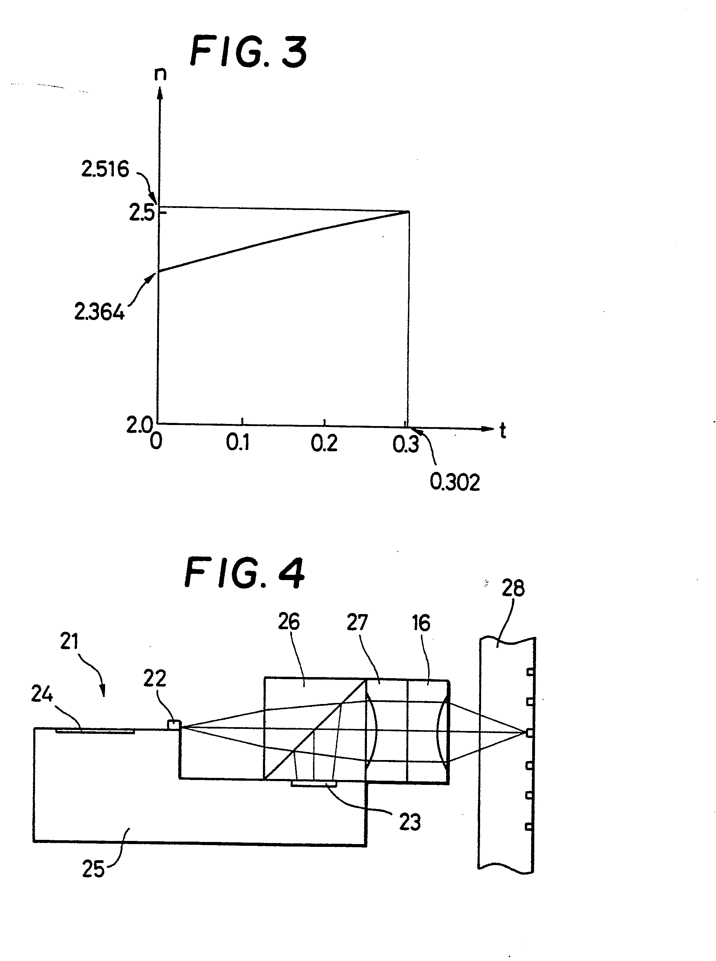

Fig. 3 shows the gradient index on the axis.

In the first embodiment, since

$n_0 = 2.364$

$n_1 = 0.54290646$

$n_2 = 0.01710937$

$n_3 = 0.05129022$

$n_4 = -1.6667991$

then, as is apparent from Fig. 3, the refractive index substantially linearly changes.

According to the first embodiment, 500 gradient index lenses 16 can be manufactured at the same time. The gradient index lens 16 can satisfy specifications of focal length = 1.65 mm, numerical aperture = 0.45, and a working distance of 0.75 mm, and has a very small aberration, i.e., a wavefront aberration = 0.016 rms$\lambda$ on the axis, a wavefront aberration = 0.067 rms$\lambda$ at a half field angle of 1° which are lower than an allowance of Marechal (0.07 rms$\lambda$).

Fig. 4 shows an optical head for an optical disk player to which the gradient index lens 16 according to the first embodiment described above is applied.

In an optical head 21, a semiconductor laser 22, a photosensor 23 for signal detection and servo, and a photosensor 24 for power monitor of the semiconductor laser 22 are integrally formed on a base 25.

A beam splitter 26 is mounted on the base 25 to be in contact with the photosensor 23. A collimator lens 27 is mounted on the beam splitter 26. The gradient index lens 16 as an objective lens is mounted on the collimator lens 27. The gradient index lens 16 faces an optical disk 28 and is separated therefrom by the above-mentioned working distance. The collimator lens 27 can be manufactured by the same method as that of the gradient index lens 16, so that the specifications of the collimator lens are different from those of the gradient index lens 16 as the objective lens.

The optical head 21 is very compact as a whole, and can integrally drive the semiconductor laser 22, the beam splitter 26, and the lenses 27 and 16.

In this application, one of 500 gradient index lenses 16 which are formed on the substrate 11 at the same time and then cut into pieces, is used. The plurality of gradient index lenses 16 formed on the substrate 11 can be used as one- or two-dimensional lens array.

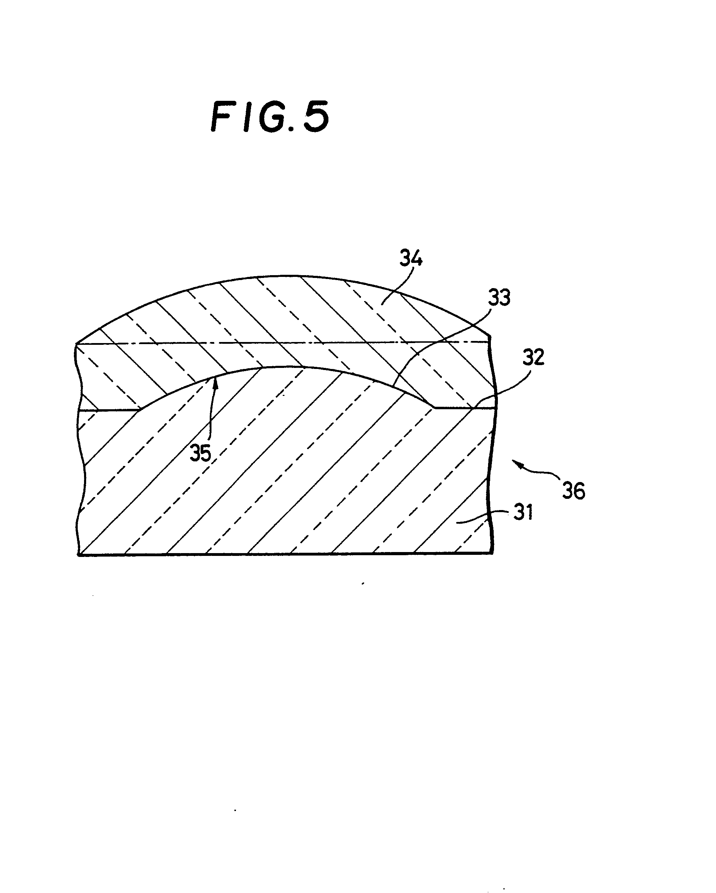

Fig. 5 shows a second embodiment. The second embodiment can have substantially the same processes as that in the first embodiment, except that a convex spherical surface 33 is formed on one surface 32 of a substrate 31 and a thin film 34 having a gradient index is formed on the surface 32.

Therefore, in the first embodiment, the parallel-plate gradient index lens 16 having the plano-convex lens portion 15 is obtained, while, in the second embodiment, a parallel-plate gradient index lens 36 having the plano-concave lens portion 35 is obtained.

Industrial Applicability

According to the present invention, a gradient index lens having a very small aberration can be easily manufactured. Therefore, the present invention can be applied to a manufacture of a lens, such as an objective lens of an optical head for an optical disk player, which requires high precision.

C L A I M S

1. A method of manufacturing a gradient index lens comprising:

the step of forming a spherical surface on a surface of a substrate;

the step of depositing a plurality of materials having different refractive indexes on said spherical surface while sequentially changing a mixing ratio thereof; and

the step of machining said spherical surface subjected to deposition to be a flat surface.

2. A method of manufacturing a gradient index lens according to claim 1, wherein said spherical surface is a concave spherical surface.

3. A method of manufacturing a gradient index lens according to claim 1, wherein said spherical surface is a convex spherical surface.

4. A method of manufacturing a gradient index lens according to any one of claims 1 to 3, wherein said plurality of materials are ZnS and ZnSe.

5. A method of manufacturing a gradient index lens according to any one of claims 1 to 3, wherein said spherical surface is formed by hot-roll press.

6. A method of manufacturing a gradient index lens according to any one of claims 1 to 3, wherein the step of deposition is performed by the CVD method.

7. A method of manufacturing a gradient index lens comprising:

the step of forming a plurality of spherical surfaces on a surface of a substrate;

the step of depositing a plurality of materials having different refractive indexes on said spherical surfaces while sequentially changing a mixing ratio thereof;

- 8 -                                                  0241558

the step of machining the spherical surfaces
subjected to the deposition to be a flat surface; and
the step of cutting said substrate so as to
separate said plurality of spherical surfaces from
each other.

*FIG. 1*

*FIG. 2*

## FIG. 3

## FIG. 4

FIG.5

# INTERNATIONAL SEARCH REPORT

International Application No. PCT/J.

**I. CLASSIFICATION OF SUBJECT MATTER** (if several classification symbols apply, indicate all) [3]

According to International Patent Classification (IPC) or to both National Classification and IPC

Int.Cl$^4$  G02B3/00, C23C14/00, C23C16/30

**II. FIELDS SEARCHED**

| | |
|---|---|
| Minimum Documentation Searched [4] | |
| Classification System | Classification Symbols |
| IPC | G02B3/00, C23C14/00, C23C16/30 |

| Documentation Searched other than Minimum Documentation to the Extent that such Documents are Included in the Fields Searched [5] |
|---|
| Jitsuyo Shinan Koho      1950 - 1985 <br> Kokai Jitsuyo Shinan Koho    1971 - 1985 |

**III. DOCUMENTS CONSIDERED TO BE RELEVANT** [14]

| Category* | Citation of Document, [16] with indication, where appropriate, of the relevant passages [17] | Relevant to Claim No. [18] |
|---|---|---|
| A | JP, A, 56-154707, (Fujitsu Limited) 30 November 1981 (30. 11. 81) (Family: none) | 1-7 |
| A | JP, A, 57-27214, (Sumitomo Electric Industries, Ltd.) 13 February 1982 (13. 02. 82) (Family: none) | 1-7 |
| Y | JP, A, 59-113660, (Fujitsu Limited) 30 June 1984 (30. 06. 84) (Family: none) | 1-3 |
| Y | US, A, 4146306, (David. Wallach) 27 March 1979 (27. 03. 79) (Family: none) | 1-3 |

\* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search [2] | Date of Mailing of this International Search Report [2] |
|---|---|
| November 19, 1986 (19. 11. 86) | December 1, 1986 (01. 12. 86) |
| International Searching Authority [1] | Signature of Authorized Officer [20] |
| Japanese Patent Office | |

Form PCT ISA/210 (second sheet) (October 1981)